# EUROPÄISCHE PATENTSCHRIFT

(11) **EP 3 936 395 B1**
(45) Veröffentlichungstag und Bekanntmachung des Hinweises auf die Patenterteilung: **28.09.2022**
(21) Anmeldenummer: 21178144.8
(22) Anmeldetag: 08.06.2021
(51) Int. Cl.: B60T 13/26, B60T 17/00, B60T 17/02, B60T 17/06, B61C 17/02, F04B 41/02, F15B 21/048

(54) **VORRICHTUNG ZUR DRUCKLUFTSPEICHERUNG**
DEVICE FOR STORAGE OF COMPRESSED AIR
DISPOSITIF D'ACCUMULATION D'AIR COMPRIMÉ

(30) Priorität: 07.07.2020 DE 102020117822
(43) Veröffentlichungstag der Anmeldung: 12.01.2022
(73) Patentinhaber: MAN Truck & Bus SE, 80995 München (DE)
(72) Erfinder: Stockinger, Felix, 81539 München (DE); Gesierich, Luis Vinzenz, 21614 Buxtehude (DE)
(74) Vertreter: v. Bezold & Partner Patentanwälte - PartG mbB

(56) Entgegenhaltungen:
- AT-A4- 514 949
- FR-A1- 2 283 805
- US-A- 5 116 207
- US-A1- 2008 219 860
- US-B1- 6 375 437

## Beschreibung

Die Erfindung betrifft eine Vorrichtung zur Druckluftspeicherung für ein Nutzfahrzeug. Nutzfahrzeuge, wie Lastkraftwagen, können mit einer Druckluftversorgung zum Betätigen pneumatischer Komponenten ausgestattet sein. Herkömmlich kann die Druckluftversorgung einen oder mehrere zylindrische Druckluftbehälter zur Druckluftspeicherung aufweisen.

Die US 2007/0234904 A1 offenbart ein Trockendruckluftmodul zur Befestigung am Rahmen eines Nutzfahrzeuges. Das Trockendruckluftmodul besteht aus einem Gehäuse, einem Luftkompressor, einem Lufttrockner und einem Reservoir. Der Luftkompressor, der Lufttrockner und das Reservoir sind in einem Gehäuse angeordnet und können gemeinsam mit dem Gehäuse am Rahmen befestigt werden. Der Lufttrockner wird mit Druckluft aus dem Luftkompressor und das Reservoir mit trockener Druckluft aus dem Lufttrockner versorgt. Der Behälter ist in der Lage, die trockene Druckluft zu speichern und dem Nutzfahrzeug zuzuführen.

Die EP 3 616 771 A1 offenbart ebenfalls ein Druckluftmodul zur Montage an einen Rahmen eines Nutzfahrzeugs. Das Druckluftmodul weist einen Luftkompressor, einen Druckluftspeicher und eine Druckluftaufbereitung auf. Das Druckluftmodul weist ferner mindestens eine Druckluft-Bremsventileinheit und eine Haltevorrichtung, die zur Montage an den Rahmen ausgebildet ist und den Luftkompressor, den Druckluftspeicher, die Druckluftaufbereitung und die mindestens eine Druckluft-Bremsventileinheit trägt, auf.

Weitere Beispiele von Druckluftmodulen sind aus FR 2 283 805 A1, AT 514 949 A4, sowie US 2008/219860 A1 ebenfalls bekannt.

Der Erfindung liegt die Aufgabe zu Grunde, eine alternative und/oder verbesserte Vorrichtung zur Druckluftspeicherung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zur Druckluftspeicherung für ein Nutzfahrzeug. Die Vorrichtung weist einen Druckluftbehälter mit einer ersten Außenseite, vorzugsweise Oberseite, und einer zweiten Außenseite, vorzugweise Unterseite, die entgegengesetzt zu der ersten Außenseite ausgerichtet ist, auf. Der Druckluftbehälter ist in einer Rahmenform, vorzugsweise Rechteck-Rahmenform, mit einer zentralen Durchgangsöffnung ausgebildet. Die zentrale Durchgangsöffnung erstreckt sich zwischen der ersten Außenseite und der zweiten Außenseite.

Vorteilhaft kann die Vorrichtung eine bessere Ausnutzung von begrenztem Bauraum ermöglichen. Bauräume zum Anordnen von Komponenten werden häufig in Form von Quadern vorgegeben, in denen dann die Komponenten je nach Anforderung möglichst dicht platziert werden können. Die Rahmenform des Druckluftbehälters ermöglicht, dass der Druckluftbehälter Außengrenzen des Bauraums möglichst gut ausfüllt und gleichzeitig in der zentralen Durchgangsöffnung Platz zum Anordnen weiterer Komponenten lässt. So kann ein vorgegebener Bauraum vorteilhaft möglichst optimal ausgenutzt werden.

Vorzugsweise kann der Druckluftbehälter einen oder mehrere Druckluftanschlüsse zur Verbindung mit mindestens einer Druckluftleitung aufweisen.

Beispielsweise kann der Druckluftbehälter ein Volumen zwischen 1 I und 20 I aufweisen.

Bevorzugt kann der Druckluftbehälter dazu ausgebildet sein, Druckluft mit mindestens oder bis zu 10 bar, 15 bar oder 20 bar zu speichern.

Vorzugsweise kann die zentrale Durchgangsöffnung im Wesentlichen eine Quaderform aufweisen.

In einem Ausführungsbeispiel weist der Druckluftbehälter ein im Wesentlichen hohlquaderförmiges Innenvolumen zum Speichern von Druckluft auf, vorzugsweise mit zumindest teilweise abgerundeten Ecken.

In einem weiteren Ausführungsbeispiel weist der Druckluftbehälter mindestens eine Versteifungsrippe auf. Vorzugsweise kann sich die mindestens eine Versteifungsrippe im Wesentlichen entlang einer gesamten Länge eines Rahmenschenkels (z. B. Rahmenlängsschenkel und/oder Rahmenquerschenkel) der Rahmenform des Druckluftbehälters erstrecken. Vorteilhaft kann die Versteifungsrippe einer Deformation beim Befüllen des Druckluftbehälters entgegenwirken. Vorzugsweise kann die mindestens eine Versteifungsrippe den Druckluftbehälter zudem derart versteifen, dass der Druckluftbehälter eine zusätzliche Tragfunktion zum Tragen einer weiteren Komponente erfüllen kann.

Vorzugsweise kann die mindestens eine Versteifungsrippe an einer Seite oder Fläche des Druckluftbehälters angeordnet sein, die weg von der zentralen Durchgangsöffnung gerichtet ist, besonders bevorzugt entgegengesetzt zu der zentralen Durchgangsöffnung ausgerichtet ist.

In einer Ausführungsform weist der Druckluftbehälter eine erste Ablassöffnung, vorzugsweise an der ersten Außenseite, und eine zweite Ablassöffnung, vorzugsweise an der zweiten Außenseite und/oder direkt gegenüberliegend zu der ersten Ablassöffnung, auf. Bevorzugt sind die erste Ablassöffnung und die zweite Ablassöffnung entgegengesetzt ausgerichtet (z. B. eine nach oben und eine nach unten). Damit kann beispielsweise ermöglicht werden, dass der Druckluftbehälter auch über Kopf bzw. umgedreht eingebaut werden kann. Es kann diejenige Ablassöffnung von der ersten Ablassöffnung und der zweiten Ablassöffnung zum Ablassen verwendet, die an der Unterseite des Druckluftbehälters angeordnet ist. Die andere Ablassöffnung kann hingegen bevorzugt verschlossen sein.

Vorzugweise kann jeweils wahlweise ein Ablassventil oder ein Verschluss in der ersten Ablassöffnung und der zweiten Ablassöffnung angeordnet sein. In der unteren Ablassöffnung von der ersten Ablassöffnung und der zweiten Ablassöffnung ist bevorzugt das Ablassventil angeordnet. In der oberen Ablassöffnung von der ersten Ablassöffnung und der zweiten Ablassöffnung ist bevorzugt der Verschluss angeordnet.

In einer weiteren Ausführungsform weist die Vorrichtung ferner eine Befestigungseinrichtung auf, die dazu ausgebildet ist, den Druckluftbehälter an einem Rahmenteil (z. B. Rahmenlängsträger oder Rahmenquerträger) des Nutzfahrzeugs (z. B. lösbar) zu befestigen. Vorzugsweise kann die Befestigungseinrichtung als eine (z. B. mit dem Rahmenteil verschraubbare) Befestigungsplatte ausgeführt sein. Alternativ oder zusätzlich kann die Befestigungseinrichtung mit zwei gegenüberliegenden Rahmenschenkeln (z. B. Rahmenlängsschenkeln oder Rahmenquerschenkeln) der Rahmenform des Druckluftbehälters gefügt (z. B. verschweißt) sein (z. B. formschlüssig, kraftschlüssig und/oder stoffschlüssig).

In einer Ausführungsvariante weist der Druckluftbehälter mindestens ein Tragelement zum Tragen einer (z. B. zum Druckluftbehälter separaten) Komponente, vorzugsweise eines weiteren Druckluftbehälters, auf. Damit kann der Druckluftbehälter vorteilhaft die andere Komponente am Rahmenteil des Nutzfahrzeugs tragen. Der Druckluftbehälter kann somit eine Druckluftspeicherfunktion und eine Halterungsfunktion in sich vereinen.

In einer weiteren Ausführungsvariante ist das mindestens eine Tragelement in der zentralen Durchgangsöffnung angeordnet und/oder zu der zentralen Durchgangsöffnung hin ausgerichtet. Vorteilhaft kann so eine Anordnung der weiteren Komponente in der zentralen Durchgangsöffnung vereinfacht werden.

In einer weiteren Ausführungsvariante sind mehrere Tragelemente umfasst, die an einander gegenüberliegenden Rahmenschenkeln (z. B. Rahmenlängsschenkeln oder Rahmenquerschenkeln) der Rahmenform des Druckluftbehälters angeordnet sind. Vorteilhaft kann so eine gleichmäßige Abstützung der Komponente von mehreren Seiten her erreicht werden.

In einer weiteren Ausführungsvariante ist das mindestens eine Tragelement als eine Spannbandführung zur Führung eines Spannbands ausgeführt. Vorteilhaft kann so die Komponente mittels mindestens eines Spannbands an dem mindestens einen Tragelement getragen sein.

In einem Ausführungsbeispiel weist die Vorrichtung ferner eine Komponente, vorzugsweise eine Druckluftkomponente, auf, die zumindest teilweise in der zentralen Durchgangsöffnung angeordnet ist. Wie bereits erwähnt, kann eine solche Anordnung besonders bauraumgünstig sein und eine dichte Packung ermöglichen.

In einem weiteren Ausführungsbeispiel ist die Komponente an dem mindestens einen Tragelement von dem Druckluftbehälter getragen, vorzugsweise mittels mindestens eines Spannbands. Der Druckluftbehälter kann so vorteilhaft eine Druckluftspeicherfunktion und eine Halterungsfunktion in sich vereinen.

In einer Ausführungsform ist die Komponente als ein weiterer, vorzugsweise zylindrischer, Druckluftbehälter ausgeführt. Vorteilhaft kann so der Bauraum möglichst optimal ausgenutzt werden, wenn ein (z. B. oberes) Zylindersegment des weiteren Druckluftbehälters in der zentralen Durchgangsöffnung angeordnet ist.

In einer weiteren Ausführungsform weist die Vorrichtung ferner einen weiteren anderen Druckluftbehälter mit einer ersten Außenseite, vorzugsweise Unterseite, und einer zweiten Außenseite, vorzugweise Oberseite, auf. Der weitere andere Druckluftbehälter ist in einer Rahmenform, vorzugsweise Rechteck-Rahmenform, mit einer zentralen Durchgangsöffnung ausgebildet, wobei sich die zentrale Durchgangsöffnung des weiteren anderen Druckluftbehälters zwischen der ersten Außenseite des weiteren anderen Druckluftbehälters und der zweiten Außenseite des weiteren anderen Druckluftbehälters erstreckt.

In einer weiteren Ausführungsform ist die Komponente teilweise (z. B. mit einem ersten oder oberen oder linken oder vorderen oder zylindersegmentförmigen oder quaderförmigen oder kugelsegmentförmigen Abschnitt) in der zentralen Durchgangsöffnung des Druckluftbehälters und teilweise (z. B. mit einem zweiten oder unteren oder rechten oder entgegengesetzten oder zylindersegmentförmigen oder quaderförmigen oder kugelsegmentförmigen Abschnitt) in der zentralen Durchgangsöffnung des weiteren anderen Druckluftbehälters angeordnet.

Vorzugsweise kann die Komponente zwischen dem Druckluftbehälter und dem weiteren anderen Druckluftbehälter angeordnet sein.

Bevorzugt können der Druckluftbehälter und der weitere Druckluftbehälter an entgegengesetzten Seiten der Komponente angeordnet sein.

In einer Ausführungsvariante weist der weitere andere Druckluftbehälter mindestens ein Tragelement, vorzugsweise eine Spannbandführung, auf, mittels der der weitere andere Druckluftbehälter an der Komponente getragen ist, vorzugsweise mittels mindestens eines Spannbands.

In einer weiteren Ausführungsvariante sind der Druckluftbehälter und der weitere andere Druckluftbehälter als Gleichteile ausgebildet. Vorzugsweise kann der weitere andere Druckluftbehälter im Vergleich zum Druckluftbehälter über Kopf oder um 180° gedreht ausgerichtet sein.

Ein weiterer Aspekt der vorliegenden Offenbarung betrifft ein Kraftfahrzeug, vorzugsweise Nutzfahrzeug (z. B. Lastkraftwagen oder Omnibus). Das Kraftfahrzeug weist ein Rahmenteil (z. B. eines Leiterrahmens) und eine Vorrichtung wie hierin offenbart auf. Die Vorrichtung ist an dem Rahmenteil befestigt (z. B. mittels einer Befestigungseinrichtung und/oder des Druckluftbehälters).

Vorzugsweise weist das Kraftfahrzeug mindestens eine pneumatisch betriebene Komponente auf, die mittels des Druckluftbehälters, des weiteren Druckluftbehälters und/oder des weiteren anderen Druckluftbehälters mit Druckluft versorgbar ist (z. B. mittels einer Druckluftleitung).

Beispielsweise weist die mindestens eine pneumatisch betriebene Komponente einen pneumatischen Betriebsbremskreis, einen pneumatischen Feststellbremskreis, einen pneumatischen Anhängerkreis, eine pneumatische Achsfederung, eine pneumatische Fahrerhauslagerung und/oder einen pneumatischen Aktor (z. B. eines Getriebes) auf.

Es ist auch möglich, die Vorrichtung wie hierin offenbart beispielsweise für Personenkraftwagen, geländegängige Fahrzeuge, stationäre Anlagen, Luft- oder Marineanwendungen zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zur Druckluftspeicherung, die an einem Rahmenteil eines Nutzfahrzeugs befestigt ist;
- Figur 2: eine Seitenansicht der Vorrichtung zur Druckluftspeicherung, die an dem Rahmenteil befestigt ist;
- Figur 3: eine Draufsicht oder Ansicht von unten auf einen Druckluftbehälter der Vorrichtung zur Druckluftspeicherung; und
- Figur 4: eine perspektivische Ansicht des Druckluftbehälters.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

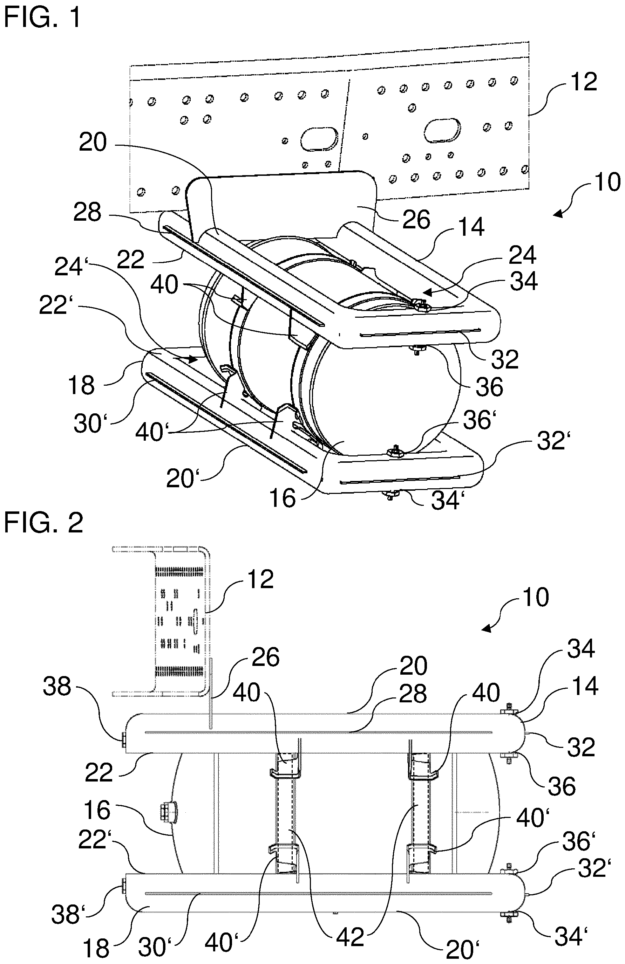

Die Figuren 1 und 2 zeigen eine Vorrichtung 10 zur Druckluftspeicherung. Die Vorrichtung 10 kann in einem Kraftfahrzeug, vorzugsweise einem Nutzfahrzeug (z. B. Lastkraftwagen oder Omnibus) umfasst sein. Die Vorrichtung 10 kann bspw. verschiedene Komponenten des Kraftfahrzeugs mit Druckluft versorgen, z. B. einen pneumatischen Betriebsbremskreis, einen pneumatischen Feststellbremskreis, einen pneumatischen Anhängerkreis, eine pneumatische Achsfederung, eine pneumatische Fahrerhauslagerung, einen pneumatischen Aktor (z. B. eines Getriebes) usw. Beispielsweise kann die Vorrichtung 10 an einem Rahmenteil 12 des Kraftfahrzeugs befestigt sein. Das Rahmenteil 12 kann vorzugsweise ein Längsträger oder eine Querträger eines Leiterrahmens sein.

Die Vorrichtung 10 weist einen Druckluftbehälter 14 auf. Bevorzugt kann die Vorrichtung 10 zusätzlich einen Druckluftbehälter 16 und einen Druckluftbehälter 18 aufweisen. Die Druckluftbehälter 14, 16 und/oder 18 sind dazu ausgeführt, Druckluft beispielsweise bis zu einem Luftdruck von mindestens 10 bar, 15 bar oder 20 bar zu speichern.

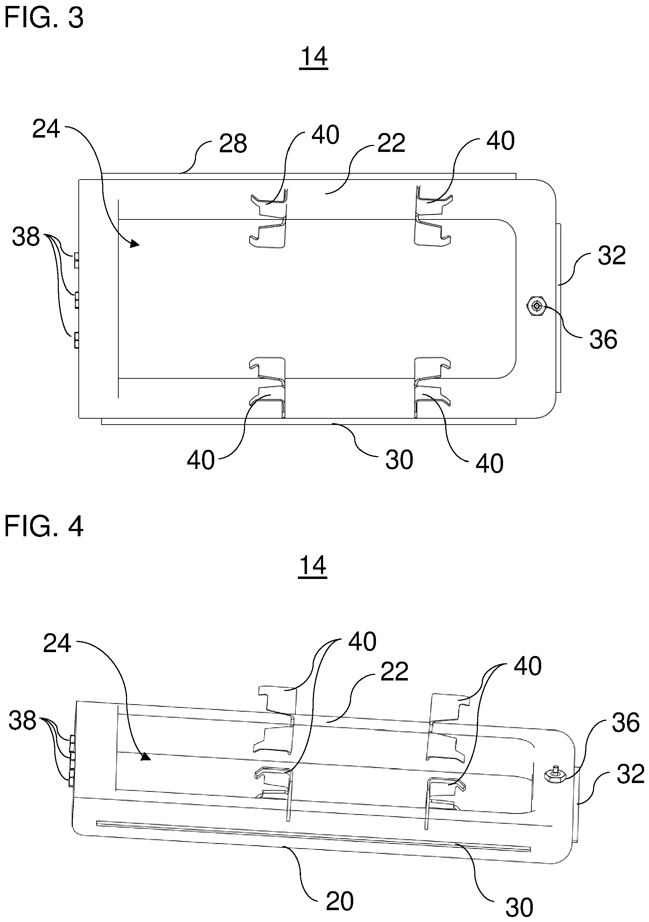

Nachfolgend sind der Druckluftbehälter 14, der Druckluftbehälter 16 und der Druckluftbehälter 18 unter Bezugnahme auf die Figuren 1 bis 4 beschrieben.

Der Druckluftbehälter 14 weist eine Rahmenform, vorzugsweise eine Rechteck-Rahmenform auf. Die Rahmenform ist bevorzugt durch vier winkelig, vorzugsweise rechtwinklig, zueinander angeordnete Rahmenschenkel gebildet. Ein Innenvolumen des Druckluftbehälters 14 weist im Wesentlichen eine Hohlquaderform, vorzugsweise mit zumindest teilweise abgerundeten Eckbereichen, auf. Zwischen einer ersten Außenseite oder Oberseite 20 des Druckluftbehälters 14 und einer zweiten Außenseite oder Unterseite 22 des Druckluftbehälters 14 erstreckt sich eine zentrale Durchgangsöffnung 24. Die zentrale Durchgangsöffnung 24 weist im Wesentlichen eine Quaderform auf. Die zentrale Durchgangsöffnung 24 bildet das Hohlvolumen des im Wesentlichen als Hohlquader geformten Innenvolumens des Druckluftbehälters 14.

Der Druckluftbehälter 14 kann mittels einer Befestigungseinrichtung 26 an dem Rahmenteil 12 befestigt sein. Die Befestigungseinrichtung 26 kann die Vorrichtung 10 vorzugsweise unterhalb des Rahmenteils 12 tragen. Die Befestigungseinrichtung 26 ist mit dem Druckluftbehälter 14 gefügt, zum Beispiel verschweißt. Die Befestigungseinrichtung 26 kann beispielsweise mit der ersten Außenseite 20 gefügt sein, vorzugsweise mit zwei gegenüberliegenden Rahmenschenkeln der Rahmenform des Druckluftbehälters 14. Die Befestigungseinrichtung 26 kann beispielsweise als eine Befestigungsplatte ausgeführt sein, die mit dem Rahmenteil 12 verschraubbar ist. Es versteht sich, dass die Befestigungseinrichtung 26 auch anders ausgeführt sein kann.

Der Druckluftbehälter 14 kann mehrere Versteifungsrippen 28, 30, 32 aufweisen. Die Versteifungsrippen 28, 30, 32 sind bevorzugt an Flächen des Druckluftbehälters 14, die entgegengesetzt zur bzw. weggewandt von der zentralen Durchgangsöffnung 24 ausgerichtet sind, angeordnet. Beispielsweise kann sich die Versteifungsrippe 28 im Wesentlichen entlang einer gesamten Länge eines Rahmenlängsschenkels der Rahmenform des Druckluftbehälters 14 erstrecken. Die Versteifungsrippe 30 kann sich im Wesentlichen entlang einer gesamten Länge eines gegenüberliegenden Rahmenlängsschenkels der Rahmenform des Druckluftbehälters 14 erstrecken. Die Versteifungsrippe 32 kann sich im Wesentlichen entlang einer gesamten Länge eines Querschenkels der Rahmenform des Druckluftbehälters 14 erstrecken, vorzugsweise jenes Querschenkels, der von beiden Querschenkeln weiter von dem Rahmenteil 12 oder der Befestigungseinrichtung 26 entfernt ist. Es ist möglich, dass mehr oder weniger als die drei Versteifungsrippen 28, 30, 32 umfasst sind. Die Versteifungsrippen 28, 30, 32 sind bevorzugt angeschweißt.

Der Druckluftbehälter 14 kann zwei Ablassöffnungen 34, 36 aufweisen. Mittels der Ablassöffnungen 34, 36 kann Flüssigkeit, die sich in dem Druckluftbehälter 14 gesammelt hat, und

Druckluft manuell abgelassen werden. Die Ablassöffnungen 34, 36 sind an den entgegengesetzten Außenseiten 20, 22 des Druckluftbehälters 14 angeordnet. Die Ablassöffnungen 34, 36 sind vorzugsweise direkt gegenüberliegend zueinander am gleichen Rahmenschenkel der Rahmenform des Druckluftbehälters 14 angeordnet. Der Rahmenschenkel ist vorzugsweise derjenige Querschenkel der Rahmenform, der von beiden Querschenkel weiter von dem Rahmenteil 12 oder der Befestigungseinrichtung 26 entfernt ist. Dies kann beispielsweise eine Zugänglichkeit zu den Ablassöffnungen 34, 36 verbessern.

In die Ablassöffnungen 34, 36 kann jeweils ein Ablassventil eingesetzt werden (wie dargestellt) ist. Es ist auch möglich, dass jeweils nur in der nach unten gerichteten Ablassöffnung ein Ablassventil angeordnet ist. Hingegen kann die nach oben gerichtete Ablassöffnung verschlossen sein. Das oder die Ablassventile können beispielsweise als Ablassschrauben ausgeführt sein.

Der Druckluftbehälter 14 kann mindestens einen Druckluftanschluss 38 zum Anschließen mindestens einer Druckluftleitung zum Befüllen oder Entleeren des Druckluftbehälters 14 aufweisen. Beispielsweise können drei Druckluftanschlüsse umfasst sein, die bevorzugt nebeneinander angeordnet sind. Der mindestens eine Druckluftanschluss 38 ist vorzugsweise nahe des Rahmenteils 12 angeordnet. Der mindestens eine Druckluftanschluss 38 ist vorzugsweise an dem Rahmenquerträger der Rahmenform des Druckluftbehälters 14 angeordnet, der von beiden Rahmenquerträgern näher zum Rahmenteil 12 oder zur Befestigungseinrichtung 26 ist. Dies kann beispielsweise eine Leitungslänge der Druckluftleitung(en) zum Anschließen an die pneumatischen Komponenten verringern und eine geschützte Anordnung des mindestens einen Druckluftanschlusses 38 ermöglichen.

Der Druckluftbehälter 14 weist mehrere Tragelemente 40 zum Tragen einer Komponente, vorzugsweise des Druckluftbehälters 16, auf. Die Tragelemente 40 sind so angeordnet, dass die Komponente bevorzugt in der zentralen Durchgangsöffnung 24 getragen ist. Bevorzugt sind die Tragelemente 40 in der zentralen Durchgangsöffnung 24 angeordnet und/oder hin zu der zentralen Durchgangsöffnung 24 ausgerichtet. Die Tragelemente 40 können an einander gegenüberliegenden Rahmenschenkeln, vorzugsweise Rahmenlängsschenkel, der Rahmenform angeordnet sein, z. B. jeweils zwei Tragelemente je Rahmenschenkel (= insgesamt vier Tragelemente, wie dargestellt ist). Je nach Ausführung ist es auch möglich, dass eine andere Anzahl an Tragelementen 40 umfasst ist. Die Tragelemente 40 sind bevorzugt als Spannbandführungen zum Halten und Führen eines Spannbands 42 (siehe gestrichelte Linie in Figur 2) ausgeführt. Die Tragelemente 40 sind bevorzugt angeschweißt.

Bevorzugt kann der Druckluftbehälter 14 als eine Schweißkonstruktion mit der Befestigungseinrichtung 26, den Versteifungsrippen 28, 30, 32 und/oder den Tragelementen 40 ausgeführt sein.

Der Druckluftbehälter 16 ist teilweise in der zentralen Durchgangsöffnung 24 angeordnet, was aus Bauraumgründen besonders vorteilhaft sein kann. Bevorzugt ist ein oberer Abschnitt (z. B. oberes Zylindersegment) des Druckluftbehälters 16 in der zentralen Durchgangsöffnung 24 angeordnet. In anderen Worten, ein oberer Abschnitt des Druckluftbehälters 16 taucht in die zentrale Durchgangsöffnung 24 ein.

Der Druckluftbehälter 16 ist mittels des Druckluftbehälters 14 an dem Rahmenteil 12 getragen. Der Druckluftbehälter 16 dient somit auch als Haltekonstruktion für den Druckluftbehälter 16. Die Spannbänder 42 befestigen den Druckluftbehälter 16 an den Tragelementen 40.

Der Druckluftbehälter 16 kann beispielsweise ein herkömmlicher zylindrischer Druckluftbehälter sein. Der Druckluftbehälter 16 kann beispielsweise ein Volumen zwischen 5 I und 100 I, vorzugsweise 40 I, aufweisen. Der Druckluftbehälter 16 kann mindestens einen Druckluftanschluss und mindestens ein Ablassventil aufweisen.

Es wird darauf hingewiesen, dass die bauraumgünstige Anordnung des Druckluftbehälter 16 in der zentralen Durchgangsöffnung 24 auch auf andere Baugruppen übertragbar ist. D.h., alternativ oder zusätzlich zu dem Druckluftbehälter 16 könnte auch eine andere Komponente, vorzugsweise Druckluftkomponente, zumindest teilweise in der zentralen Durchgangsöffnung 24 angeordnet sein.

Der Druckluftbehälter 18 kann bevorzugt wie der Druckluftbehälter 14 ausgeführt sein. D.h., die Druckluftbehälter 14 und 18 können als Gleichteile ausgeführt sein. In den Figuren 1 und 2 sind Elemente des Druckluftbehälters 18, die den Elementen des Druckluftbehälters 14 entsprechen, mit dem gleichen Bezugszeichen mit hinzugefügtem Apostroph (') gekennzeichnet. Die für den Druckluftbehälter 14 gemachten Ausführungen gelten somit gleichermaßen für den Druckluftbehälter 18.

Im Vergleich zum Druckluftbehälter 14 ist der Druckluftbehälter 18 über Kopf angeordnet. D.h., die erste Außenseite 20 ist beim Druckluftbehälter 14 die Oberseite, und die erste Außenseite 20' ist beim Druckluftbehälter 18 die Unterseite. Die zweite Außenseite 22 ist beim Druckluftbehälter 14 die Unterseite, und die zweite Außenseite 22' ist beim Druckluftbehälter 18 die Oberseite.

Der Druckluftbehälter 18 ist so angeordnet, dass ein unterer Abschnitt (z. B. unteres Zylindersegment) des Druckluftbehälters 16 in der zentralen Durchgangsöffnung 24' des Druckluftbehälters 18 angeordnet ist bzw. eintaucht. Der Druckluftbehälter 18 ist mittels des Druckluftbehälters 16 und des Druckluftbehälters 14 an dem Rahmenteil 12 getragen. Im Einzelnen sind die Tragelemente 40' des Druckluftbehälters 18 mittels der Spannbänder 42 an dem Druckluftbehälter 16 und den Tragelementen 40 des Druckluftbehälters 14 getragen.

Es ist auch möglich, dass die Druckluftbehälter 14, 16 und 18 nicht übereinander angeordnet sind, sondern seitlich nebeneinander. In einer solchen Konfiguration können zumindest die Druckluftbehälter 14 und 18 um 90° bezüglich einer Längsachse oder Querachse des Vorrichtung 10 gedreht sein. Prinzipiell ist es somit bspw. möglich, dass die Druckluftbehälter 14 und 18 oben und unten, oder links und rechts, oder vorne und hinten an dem Druckluftbehälter 16 angeordnet sind. Optional können die Positionen der Ablassöffnungen 34, 36 an eine Ausrichtung der Druckluftbehälter 14 und 18 angepasst werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Vorrichtung zur Druckluftspeicherung
- 12: Rahmenteil
- 14: Druckluftbehälter
- 16: (weiterer) Druckluftbehälter (Beispiel für "Komponente")
- 18: (weiterer anderer) Druckluftbehälter
- 20: erste Außenseite
- 22: zweite Außenseite
- 24: zentrale Durchgangsöffnung
- 26: Befestigungseinrichtung
- 28: Versteifungsrippe
- 30: Versteifungsrippe
- 32: Versteifungsrippe
- 34: Ablassöffnung
- 36: Ablassöffnung
- 38: Druckluftanschluss
- 40: Tragelement
- 42: Spannband

## Patentansprüche

1. Vorrichtung (10) zur Druckluftspeicherung für ein Nutzfahrzeug, aufweisend:
einen Druckluftbehälter (14) mit einer ersten Außenseite (20), vorzugsweise Oberseite, und einer zweiten Außenseite (22), vorzugweise Unterseite, die entgegengesetzt zu der ersten Außenseite (20) ausgerichtet ist,
**dadurch gekennzeichnet, dass**
der Druckluftbehälter (14) in einer Rahmenform, vorzugsweise Rechteck-Rahmenform, mit einer zentralen Durchgangsöffnung (24) ausgebildet ist, wobei sich die zentrale Durchgangsöffnung (24) zwischen der ersten Außenseite (20) und der zweiten Außenseite (22) erstreckt.

2. Vorrichtung (10) nach Anspruch 1, wobei:
der Druckluftbehälter (14) ein im Wesentlichen hohlquaderförmiges Innenvolumen zum Speichern von Druckluft aufweist, vorzugsweise mit zumindest teilweise abgerundeten Ecken.

3. Vorrichtung (10) nach Anspruch 1 oder Anspruch 2, wobei:
der Druckluftbehälter (14) mindestens eine Versteifungsrippe (28, 30, 32) aufweist, die sich bevorzugt im Wesentlichen entlang einer gesamten Länge eines Rahmenschenkels der Rahmenform des Druckluftbehälters (14) erstreckt.

4. Vorrichtung (10) nach einem der vorherigen Ansprüche, wobei:
der Druckluftbehälter (14) eine erste Ablassöffnung (34), vorzugsweise an der ersten Außenseite (20), und eine zweite Ablassöffnung (36), vorzugsweise an der zweiten Außenseite (22) und/oder direkt gegenüberliegend zu der ersten Ablassöffnung (34), aufweist, und
die erste Ablassöffnung (34) und die zweite Ablassöffnung (36) entgegengesetzt ausgerichtet sind.

5. Vorrichtung (10) nach einem der vorherigen Ansprüche, ferner aufweisend:
eine Befestigungseinrichtung (26), die dazu ausgebildet ist, den Druckluftbehälter (14) an einem Rahmenteil (12) des Nutzfahrzeugs zu befestigen,
wobei vorzugsweise:
die Befestigungseinrichtung (26) als eine Befestigungsplatte ausgeführt ist, und/oder
die Befestigungseinrichtung (26) mit zwei gegenüberliegenden Rahmenschenkeln der Rahmenform des Druckluftbehälters (14) gefügt ist.

6. Vorrichtung (10) nach einem der vorherigen Ansprüche, wobei:
der Druckluftbehälter (14) mindestens ein Tragelement (40) zum Tragen einer Komponente (16), vorzugsweise eines weiteren Druckluftbehälters, aufweist.

7. Vorrichtung (10) nach Anspruch 6, wobei:
das mindestens eine Tragelement (40) in der zentralen Durchgangsöffnung (24) angeordnet und/oder zu der zentralen Durchgangsöffnung (24) hin ausgerichtet ist; und/oder
mehrere Tragelemente (24) umfasst sind, die an einander gegenüberliegenden Rahmenschenkeln der Rahmenform des Druckluftbehälters (14) angeordnet sind; und/oder
das mindestens eine Tragelement (24) als eine Spannbandführung zur Führung eines Spannbands (24) ausgeführt ist.

8. Vorrichtung (10) nach einem der vorherigen Ansprüche, ferner aufweisend:
eine Komponente (16), vorzugsweise eine Druckluftkomponente, die zumindest teilweise in der zentralen Durchgangsöffnung (24) angeordnet ist.

9. Vorrichtung (10) nach Anspruch 8, wobei:
die Komponente (16) an dem mindestens einen Tragelement (40) von dem Druckluftbehälter (14) getragen ist, vorzugsweise mittels mindestens eines Spannbands (42).

10. Vorrichtung (10) nach Anspruch 8 oder Anspruch 9, wobei:
die Komponente (16) als ein weiterer, vorzugsweise zylindrischer, Druckluftbehälter ausgeführt ist.

11. Vorrichtung (10) nach einem der vorherigen Ansprüche, ferner aufweisend:
einen weiteren anderen Druckluftbehälter (18) mit einer ersten Außenseite (20'), vorzugsweise Unterseite, und einer zweiten Außenseite (20'), vorzugweise Oberseite,
wobei der weitere andere Druckluftbehälter (18) in einer Rahmenform, vorzugsweise Rechteck-Rahmenform, mit einer zentralen Durchgangsöffnung (24') ausgebildet ist, wobei sich die zentrale Durchgangsöffnung (24') des weiteren anderen Druckluftbehälters (18) zwischen der ersten Außenseite (20') des weiteren anderen Druckluftbehälters (18) und der zweiten Außenseite (22') des weiteren anderen Druckluftbehälters (18) erstreckt.

12. Vorrichtung (10) nach Anspruch 11, wobei:
die Komponente (16) teilweise in der zentralen Durchgangsöffnung (24) des Druckluftbehälters (14) und teilweise in der zentralen Durchgangsöffnung (24') des weiteren anderen Druckluftbehälters (18) angeordnet ist.

13. Vorrichtung (10) nach Anspruch 11 oder Anspruch 12, wobei:
der weitere andere Druckluftbehälter (18) mindestens ein Tragelement (40'), vorzugsweise eine Spannbandführung, aufweist, mittels der der weitere andere Druckluftbehälter (18) an der Komponente (16) getragen ist, vorzugsweise mittels mindestens eines Spannbands (42).

14. Vorrichtung (10) nach einem der Ansprüche 11 bis 13, wobei:
der Druckluftbehälter (14) und der weitere andere Druckluftbehälter (18) als Gleichteile ausgebildet sind,
wobei vorzugsweise:
der weitere andere Druckluftbehälter (18) im Vergleich zum Druckluftbehälter (14) über Kopf oder um 180° gedreht ausgerichtet ist.

15. Kraftfahrzeug, vorzugsweise Nutzfahrzeug, aufweisend:
ein Rahmenteil (12); und
eine Vorrichtung (10) nach einem der vorherigen Ansprüche, wobei die Vorrichtung (10) an dem Rahmenteil (12) befestigt ist.

## Claims

1. An apparatus (10) for compressed-air storage for a utility vehicle, having:
a compressed-air container (14) with a first outer side (20), preferably a top side, and with a second outer side (22), preferably a bottom side, which is oriented oppositely in relation to the first outer side (20),
**characterized in that**
the compressed-air container (14) is formed in the shape of a frame, preferably in the shape of a rectangular frame, with a central through-opening (24), wherein the central through-opening (24) extends between the first outer side (20) and the second outer side (22).

2. The apparatus (10) according to Claim 1, wherein:
the compressed-air container (14) has a substantially hollow-cuboidal inner volume for storage of compressed air, preferably with at least partially rounded edges.

3. The apparatus (10) according to Claim 1 or Claim 2, wherein:
the compressed-air container (14) has at least one stiffening rib (28, 30, 32) which preferably extends substantially along an entire length of a frame leg of the frame shape of the compressed-air container (14).

4. The apparatus (10) according to one of the preceding claims, wherein:
the compressed-air container (14) has a first discharge opening (34), preferably on the first outer side (20), and a second discharge opening (36), preferably on the second outer side (22) and/or situated directly opposite the first discharge opening (34), and
the first discharge opening (34) and the second discharge opening (36) are oppositely oriented.

5. The apparatus (10) according to one of the preceding claims, furthermore having:
a fastening device (26) which is configured to fasten the compressed-air container (14) to a frame part (12) of the utility vehicle,
wherein preferably:
the fastening device (26) is in the form of a fastening plate, and/or
the fastening device (26) is joined to two oppositely situated frame legs of the frame shape of the compressed-air container (14).

6. The apparatus (10) according to one of the preceding claims, wherein:
the compressed-air container (14) has at least one support element (40) for supporting a component (16), preferably a further compressed-air container.

7. The apparatus (10) according to Claim 6, wherein:
the at least one support element (40) is arranged in the central through-opening (24) and/or is oriented towards the central through-opening (24), and/or
multiple support elements (24) which are arranged on mutually oppositely situated frame legs of the frame shape of the compressed-air container (14) are comprised; and/or
the at least one support element (24) is in the form of a clamping-band guide for guiding a clamping band (24).

8. The apparatus (10) according to one of the preceding claims, furthermore having:
a component (16), preferably a compressed-air component, which is arranged at least partly in the central through-opening (24).

9. The apparatus (10) according to Claim 8, wherein:
the component (16) is supported against the at least one support element (40) by the compressed-air container (14), preferably by means of at least one clamping band (42).

10. The apparatus (10) according to Claim 8 or Claim 9, wherein:
the component (16) is in the form of a further, preferably cylindrical, compressed-air container.

11. The apparatus (10) according to one of the preceding claims, furthermore having:
a further, different compressed-air container (18) with a first outer side (20'), preferably a bottom side, and with a second outer side (20'), preferably a top side,
wherein the further, different compressed-air container (18) is formed in the shape of a frame, preferably in the shape of a rectangular frame, with a central through-opening (24'), wherein the central through-opening (24') of the further, different compressed-air container (18) extends between the first outer side (20') of the further, different compressed-air container (18) and the second outer side (22') and the second outer side (22') of the further, different compressed-air container (18).

12. The apparatus (10) according to Claim 11, wherein:
the component (16) is arranged partly in the central through-opening (24) of the compressed-air container (14) and partly in the central through-opening (24') of the further, different compressed-air container (18).

13. The apparatus (10) according to Claim 11 or Claim 12, wherein:
the further, different compressed-air container (18) has at least one support element (40'), preferably a clamping-band guide, by means of which the further, different compressed-air container (18) is supported against the component (16), preferably by means of at least one clamping band (42) .

14. The apparatus (10) according to one of Claims 11 to 13, wherein:
the compressed-air container (14) and the further, different compressed-air container (18) are formed as identical parts,
wherein preferably:
the further, different compressed-air container (18) is oriented upside down or rotated through 180° in comparison with the compressed-air container (14) .

15. Motor vehicle, preferably a utility vehicle, having:
a frame part (12); and
an apparatus (10) according to one of the preceding claims, wherein the apparatus (10) is fastened to the frame part (12).

## Revendications

1. Dispositif (10) de stockage d'air comprimé pour un véhicule utilitaire, présentant :
un réservoir d'air comprimé (14) ayant un premier côté extérieur (20), de préférence un côté supérieur, et un deuxième côté extérieur (22), de préférence un côté inférieur, qui est orienté à l'opposé du premier côté extérieur (20),
**caractérisé en ce que**
le réservoir d'air comprimé (14) est configuré selon une forme de cadre, de préférence une forme de cadre rectangulaire, avec une ouverture de passage centrale (24), l'ouverture de passage centrale (24) s'étendant entre le premier côté extérieur (20) et le deuxième côté extérieur (22).

2. Dispositif (10) selon la revendication 1, dans lequel :
le réservoir d'air comprimé (14) présente un volume intérieur essentiellement en forme de parallélépipède creux pour stocker de l'air comprimé, de préférence avec des coins au moins partiellement arrondis.

3. Dispositif (10) selon la revendication 1 ou la revendication 2, dans lequel :
le réservoir d'air comprimé (14) présente au moins une nervure de renforcement (28, 30, 32) qui s'étend de préférence essentiellement le long d'une longueur entière d'une branche de cadre de la forme de cadre du réservoir d'air comprimé (14).

4. Dispositif (10) selon l'une quelconque des revendications précédentes, dans lequel :
le réservoir d'air comprimé (14) présente une première ouverture d'évacuation (34), de préférence sur le premier côté extérieur (20), et une deuxième ouverture d'évacuation (36), de préférence sur le deuxième côté extérieur (22) et/ou directement en vis-à-vis de la première ouverture d'évacuation (34), et
la première ouverture d'évacuation (34) et la deuxième ouverture d'évacuation (36) sont orientées à l'opposé.

5. Dispositif (10) selon l'une quelconque des revendications précédentes, présentant en outre :
un appareil de fixation (26), qui est configuré pour fixer le réservoir d'air comprimé (14) à une partie de cadre (12) du véhicule utilitaire,
dans lequel de préférence :
l'appareil de fixation (26) est réalisé sous la forme d'une plaque de fixation, et/ou
l'appareil de fixation (26) est joint à deux branches de cadre opposées de la forme de cadre du réservoir d'air comprimé (14).

6. Dispositif (10) selon l'une quelconque des revendications précédentes, dans lequel :
le réservoir d'air comprimé (14) présente au moins un élément de support (40) pour supporter un composant (16), de préférence un réservoir d'air comprimé supplémentaire.

7. Dispositif (10) selon la revendication 6, dans lequel :
l'au moins un élément de support (40) est agencé dans l'ouverture de passage centrale (24) et/ou est orienté vers l'ouverture de passage centrale (24) ; et/ou
plusieurs éléments de support (24) sont compris, qui sont agencés sur des branches de cadre opposées les unes aux autres de la forme de cadre du réservoir d'air comprimé (14) ; et/ou
l'au moins un élément de support (24) est réalisé sous la forme d'un guide de bande de serrage pour guider une bande de serrage (24).

8. Dispositif (10) selon l'une quelconque des revendications précédentes, présentant en outre :
un composant (16), de préférence un composant à air comprimé, qui est agencé au moins partiellement dans l'ouverture de passage centrale (24).

9. Dispositif (10) selon la revendication 8, dans lequel :
le composant (16) est supporté par le réservoir d'air comprimé (14) sur l'au moins un élément de support (40), de préférence au moyen d'au moins une bande de serrage (42).

10. Dispositif (10) selon la revendication 8 ou la revendication 9, dans lequel :
le composant (16) est réalisé sous la forme d'un réservoir d'air comprimé supplémentaire, de préférence cylindrique.

11. Dispositif (10) selon l'une quelconque des revendications précédentes, présentant en outre :
un autre réservoir d'air comprimé supplémentaire (18) ayant un premier côté extérieur (20'), de préférence un côté inférieur, et un deuxième côté extérieur (20'), de préférence un côté supérieur,
dans lequel l'autre réservoir d'air comprimé supplémentaire (18) est configuré selon une forme de cadre, de préférence une forme de cadre rectangulaire, avec une ouverture de passage centrale (24'), l'ouverture de passage centrale (24') de l'autre réservoir d'air comprimé supplémentaire (18) s'étendant entre le premier côté extérieur (20') de l'autre réservoir d'air comprimé supplémentaire (18) et le deuxième côté extérieur (22') de l'autre réservoir d'air comprimé supplémentaire (18).

12. Dispositif (10) selon la revendication 11, dans lequel :
le composant (16) est agencé partiellement dans l'ouverture de passage centrale (24) du réservoir d'air comprimé (14) et partiellement dans l'ouverture de passage centrale (24') de l'autre réservoir d'air comprimé supplémentaire (18).

13. Dispositif (10) selon la revendication 11 ou la revendication 12, dans lequel :
l'autre réservoir d'air comprimé supplémentaire (18) présente au moins un élément de support (40'), de préférence un guide de bande de serrage, au moyen duquel l'autre réservoir d'air comprimé supplémentaire (18) est supporté sur le composant (16), de préférence au moyen d'au moins une bande de serrage (42).

14. Dispositif (10) selon l'une quelconque des revendications 11 à 13, dans lequel :
le réservoir d'air comprimé (14) et l'autre réservoir d'air comprimé supplémentaire (18) sont configurés sous forme de parties identiques,
dans lequel de préférence :
l'autre réservoir d'air comprimé supplémentaire (18) est orienté à l'envers ou tourné à 180° en comparaison du réservoir d'air comprimé (14).

15. Véhicule automobile, de préférence véhicule utilitaire, présentant :
une partie de cadre (12) ; et
un dispositif (10) selon l'une quelconque des revendications précédentes, le dispositif (10) étant fixé à la partie de cadre (12).
